(19)

Europäisches Patentamt
European Patent Office
Office européen des brevets

(11) **EP 2 600 188 A1**

(12) **EUROPEAN PATENT APPLICATION**
published in accordance with Art. 153(4) EPC

(43) Date of publication:
05.06.2013 Bulletin 2013/23

(51) Int Cl.:
*G02F 1/13357* (2006.01)  *F21V 8/00* (2006.01)
*G02B 6/00* (2006.01)

(21) Application number: 10855215.9

(22) Date of filing: 15.11.2010

(86) International application number:
PCT/CN2010/078758

(87) International publication number:
WO 2012/012988 (02.02.2012 Gazette 2012/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 30.07.2010 CN 201010245696

(71) Applicant: Shenzhen China Star Optoelectronics
Technology Co. Ltd
Shenzhen, Guangdong 518106 (CN)

(72) Inventors:
• FANG, Kuojun
Shenzhen, Guangdong 518106 (CN)
• KUO, Yicheng
Shenzhen, Guangdong 518106 (CN)
• CAO, Qian
Shenzhen, Guangdong 518106 (CN)

(74) Representative: Isarpatent
Patent- und Rechtsanwälte
Postfach 44 01 51
80750 München (DE)

(54) **LIGHT GUIDE PLATE AND BACKLIGHT MODULE**

(57) The present invention discloses a backlight module (100, 500, 700) having a light guide plate (110, 510, 710) and a plurality of backlight sources (120). The light guide plate (110, 510, 710) contains a plurality of grooves (111, 511, 711, 112, 512, 712) which divide the light guide plate (110, 510, 710) into several domains. All of the grooves (111, 511, 711, 112, 512, 712) have a specific cross section which may be triangular, trapezoidal, or convex curved in shape. The light guide plate (110, 510, 710) can reflect light emitted by the backlight sources (120) through specific angles resulted from the specific cross sections of the grooves (111, 511, 711, 112, 512, 712). Therefore, it is entirely possible to achieve the target of local dimming of the backlight module (100, 500, 700) by means of a design of positions of the grooves (111, 511, 711, 112, 512, 712) and of angles of the cross sections.

Fig. 1

EP 2 600 188 A1

## Description

BACKGROUND OF THE INVENTION

1. Field of the Invention

The present invention relates to a backlight module and a light guide plate thereof, and more particularly, to a backlight module comprising a special-designed light guide plate.

2. Description of Prior Art

With a rapid development of monitor types, novel and colorful monitors with high resolution, e.g., liquid crystal displays (LCDs), are indispensable components used in various electronic products such as monitors for notebook computers, personal digital assistants (PDAs), digital cameras, and projectors. The demand for the novelty and colorful monitors has increased tremendously.

A backlight module is a key component of a liquid crystal display (LCD). For the liquid crystal fails to shine itself, the purpose of the backlight module is to provide backlight by means of a light source with sufficient brightness and even distribution, wherein the light source emits light into an optics-mechanism to simply and effectively spread as a planar light surface with high luminance and uniform brightness. Because the LCD is widely used in various electronic products such as a monitor, a notebook computer, a digital camera, and a projector, especially a high growth of the notebook and the LCD monitor using large-size LCD panels, the demand for the backlight module has increased tremendously.

A liquid crystal display (LCD) mainly comprises a backlight module, a reflector, a light guide plate, a diffusion sheet, a brightness enhancement film (BEF), and a liquid crystal panel. After light emitted by a light source enters the light guide plate, the diffusing structure disposed at the bottom surface of the light guide plate guides the light to become an evenly-distributed planar light source. The reflector at one side of the light guide plate reflects the light emitted to the reflector back to the light guide plate to avoid the leakage of the light source and to increase the efficiency of light utilization. Next, the light emitted by the light guide plate undergoes a uniform lighting effect of the diffusion sheet and a light-gathering effect of the BEF to enhance the brightness and evenness of the light source. Then, the light is emitted into the liquid crystal panel.

At present, an LCD uses light emitting diodes (LEDs) as light sources in addition to using cold cathode fluorescent lamps (CCFLs). LEDs have become the mainstream backlight source for LCD televisions in recent years, because they are mercury-free and thus environmentally-friendly. In addition, LEDs respond fast.

The light guide plate is a wedge-shaped plate with a glossy surface. Circular or square diffusing structures are engraved on the bottom surface of the light guide plate. A large amount of light beams emit towards a thinner end of the reflector based on a principle of total internal reflection. Once the light beams hit the diffusing structures on the bottom surface of the light guide plate, the reflective light beams diffuse everywhere and emits out of a front surface of the light guide plate resulting from breaking the criteria of total internal reflection. By using diffusing structures with different densities and sizes, the light guide plate can radiate light evenly.

The brightness of the light guide plate is mainly determined by the brightness of light generated by the light source. In order to reduce power consumption, the backlight module adjusts local light emission brightness. However, a light source with one-sided light has difficulty locating illumination target regions precisely in a region distant from the source light when undergoing dimming. As for a light source with two-sided light, the brightness of the two regions is influenced by each other when the light source undergoes dimming.

SUMMERY OF THE INVENTION

Therefore, the object of the present invention is to propose a backlight module having a light guide plate inside. The light guide plate comprises a plurality of grooves. The cross section of each groove has a special shape. The light emitted by the backlight sources inside the backlight module is reflected by the grooves. The reflected light has a specific angle of reflection because of the special shapes of the grooves. In this way, as long as angles of the cross section of the grooves are designed properly, reflection of light can be adjusted to make light of the light guide plate be distributed more evenly to solve problems occurring in the prior art.

According to the present invention, a light guide plate comprises a bottom surface, a light emitting surface opposite to the bottom surface, and two light incident surfaces, and a plurality of grooves disposed on the bottom surface. The two light incident surfaces are in parallel to each other and are connected to the bottom surface and to the light emitting surface. The groove comprises a first groove and a plurality of second grooves. The first groove is extended in a direction parallel to the light incident surfaces. The cross section of the first groove is trapezoidal, convex curved, or triangular in shape. The plurality of second grooves are extended in a direction perpendicular to the light incident surfaces. The cross sections of the plurality of second grooves are trapezoidal, convex curved, or triangular in shape.

According to the present invention, a backlight module comprises a plurality of backlight sources and a light guide plate. The plurality of backlight sources are arranged at both sides of the light guide plate in a first direction for emitting light. The light guide plate further comprises a first groove and a plurality of second grooves. The first groove corresponds to the first direction, and the cross section of the first groove is trapezoidal, convex curved, or triangular in shape. The plurality of second grooves correspond to a second direction perpendicular to the first direction, and the cross section of the second grooves are trapezoidal, convex curved, or triangular in shape. The first groove and the plurality of second grooves divide the light guide plate into a plurality of domains. A brightness of each of the plurality of domains is controlled by at least one backlight source from the plurality of backlight sources.

In one aspect of the present invention, for the triangular-shaped first groove or the triangular-shaped second grooves, a distance between a vertex of the triangular-shaped first groove or the triangular-shaped second grooves and a light emitting surface of the light guide plate, or an angle of the vertex of the triangle, or a distance between a bottom surface and a reflective layer are adjustable. For the trapezoid-shaped first groove or the trapezoid-shaped second grooves, a distance between an upper base of the trapezoid-shaped first groove or the trapezoid -shaped second grooves and a light emitting surface of the light guide plate, or an angle of the vertex of the triangle, or a distance between a bottom surface and a reflective layer are adjustable. For the convex-curved-shaped first groove or the convex-curved-shaped second grooves, a distance between a peak of the convex-curved-shaped first groove or the convex-curved-shaped second grooves and a light emitting surface of the light guide plate, or a distance between a bottom surface and a reflective layer are adjustable.

Compared with the prior art, the light guide plate inside the backlight module of the present invention comprises a plurality of grooves. The cross section of each groove has a special shape. The light emitted by the backlight sources inside the backlight module is reflected by the grooves. The reflected light has a specific angle of reflection owing to the special shapes of the grooves. In this way, as long as angles of the cross section of the grooves are designed properly, reflection of light can be adjusted to make light of the light guide plate be more evenly distributed to achieve the target of local dimming. Moreover, the grooves divide the light guide plate into a plurality of domains, causing light of each domain to be partially isolated. So the light of each domain does not interact with each other easily. Thus, the brightness of backlight sources can be more easily controlled by a backlight module designer and further, the brightness of individual domains can be controlled.

These and other features, aspects and advantages of the present disclosure will become understood with reference to the following description, appended claims and accompanying figures.

BRIEF DESCRIPTION OF THE DRAWINGS

Fig. 1 is a schematic diagram of the backlight module according to a first embodiment of the present invention.

Fig. 2 is a top view of the backlight module shown Fig. 1.
Fig. 3 is a side view of the backlight module shown Fig. 1.
Fig. 4 is a side view of the backlight module.
Fig. 5 is a schematic diagram of the backlight module according to a second embodiment of the present invention.
Fig. 6 is a side view of the backlight module shown in Fig. 5.
Fig. 7 is a schematic diagram of the backlight module according to a third embodiment of the present invention.
Fig. 8 is a side view of the backlight module in Fig. 7.

DETAILED DESCRIPTION OF THE PREFERRED EMBODIMENTS

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

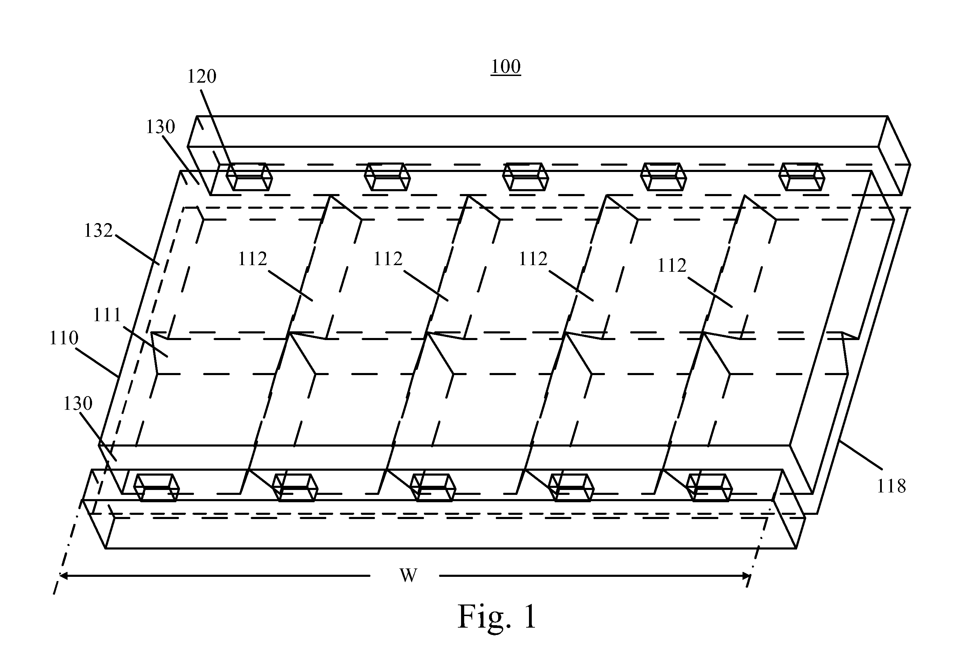

Referring to Fig. 1, which is a schematic diagram of the backlight module 100 according to a first embodiment in the present invention. As shown in Fig. 1, the backlight module 100 comprises a light guide plate 110, a reflective layer 118, and a plurality of backlight sources 120. It is notified that, in order to simplify descriptions, other components (e.g., a diffusion sheet, a prism, etc.) required by the backlight module 100 are not illustrated in Fig. 1. Those skilled in this art are supposed to understand how these components function and operate, so no further details will be provided.

As shown in Fig. 1, ten backlight sources 120 are respectively disposed on both sides of light incident surfaces 130 of the light guide plate 110 in a horizontal direction. The two light incident surfaces 130 are in parallel to each other. The two light incident surfaces 130 are in parallel to each other. The light guide plate 110 comprises a horizontal groove 111 and four vertical grooves 112 on the bottom surface relative to the light incident surfaces 130. The horizontal groove 111 and four vertical grooves 112 divide the light guide plate 110 into ten domains. Each of the domains isolated from the grooves has an individual light emission area which has a corresponding backlight source 120. In other words, the ten domains are controlled by their individual corresponding backlight source 120.

Please continue referring to Fig. 1. The cross section of the horizontal groove 111 and vertical grooves 112 is triangular in shape. The surface of the grooves can undergo a microstructure processing or attach reflector sheets to control light to be emitted to the light emitting surface 132 of the light guide plate 110. The light emitting surface 132 is perpendicular to the two light incident surfaces 130. It is notified that light emission may be influenced by the horizontal groove 111 and the vertical grooves 112 because side surfaces of the horizontal groove 111 and of the vertical grooves 112 can reflect light. Thus, the light of each domain does not interact with each other.

It is notified that, only four vertical grooves 112 are illustrated in Fig. 1, but in practical applications the light guide plate 110 can comprise more or fewer vertical grooves 112. Such a corresponding modification falls within the spirit and scope of the present invention. Moreover, each domain corresponds to a backlight source 120 in Fig. 1, but practically each domain can correspond to more backlight sources 120. In other words, the present invention does not place a limit on the number of backlight sources 120. Such a corresponding modification falls within the spirit and scope of the present invention.

In addition, the present invention does not limit the implementation of the backlight sources 120; that is, the backlight sources 120 can be implemented by a cathode ray tube (CRT) or by a light emitting diode (LED). Such a corresponding modification falls within the spirit and scope of the present invention.

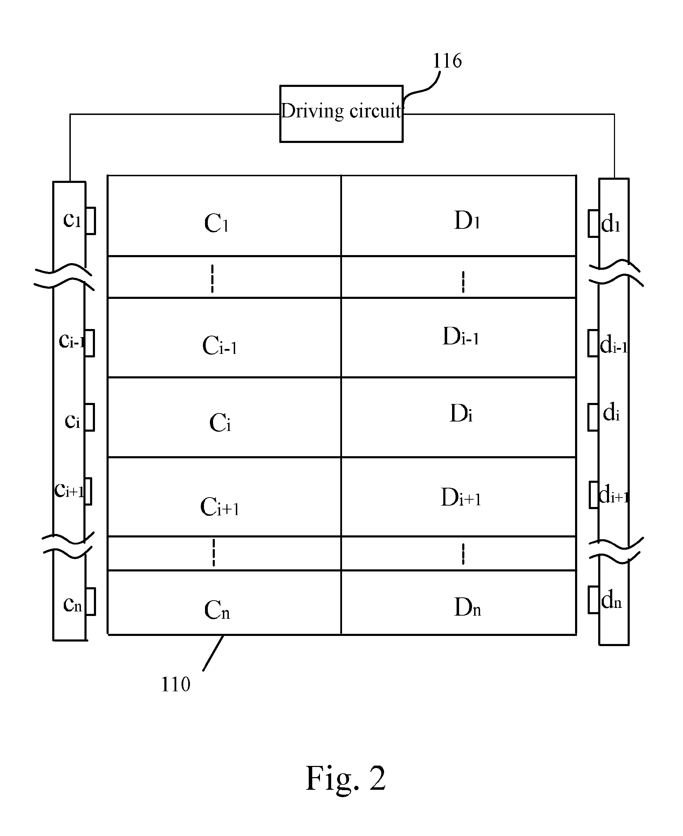

Please refer to Fig. 2. Fig. 2 is a top view of the backlight module 100 shown Fig. 1. To demonstrate mutual controlling relationships, each domain in Fig. 2 has a label identical to the label of the corresponding backlight source. That is, the domain Ci is controlled by the backlight source ci; the domain Di is controlled by the backlight source di. Moreover, as mentioned above, the backlight source ci comprises one or more LEDs or other light sources; the backlight source di comprises one or more LEDs or other light sources as well. By means of this structure, the present invention can detect the brightness of each domain based on one or more succeeding frames of image data and feed back the signal to the LED driving circuit 116. In this way, the light sources can dynamically adjust light emission brightness based on succeeding image data to further achieve the target of local dimming.

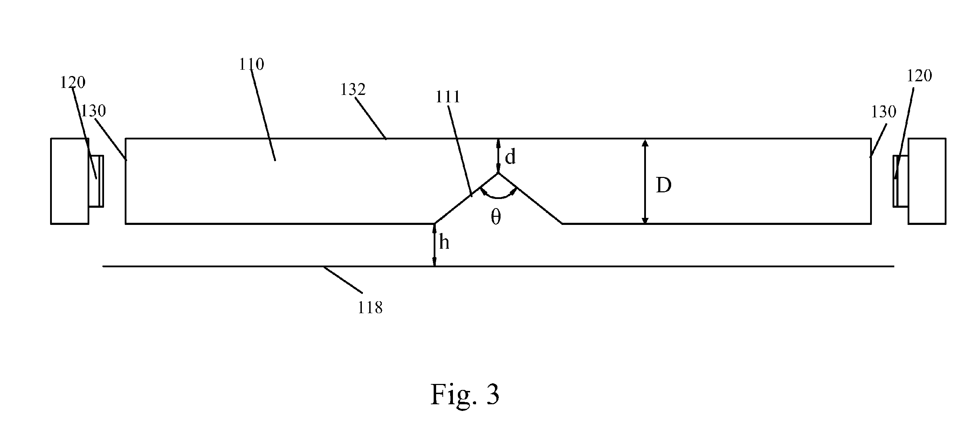

Please refer to Fig. 3, which is a side view of the backlight module 100 shown Fig. 1. A triangle shown in Fig. 3 is the above-mentioned horizontal groove 111. The parameter d indicates the distance between the vertex of the triangle and the light emitting surface 132 of the light guide plate 110; θ indicates the vertex of the triangle; h indicates the distance between the bottom surface of the light guide plate 110 and the reflective layer 118. The three parameters d, θ, and h of the triangle can be determined by designers. As long as materials of light guide plates, microstructures, and light sources are settled, a proper design of d, θ, and h can change the distribution of emergent light of the light guide plate and make the light of each domain be more evenly distributed.

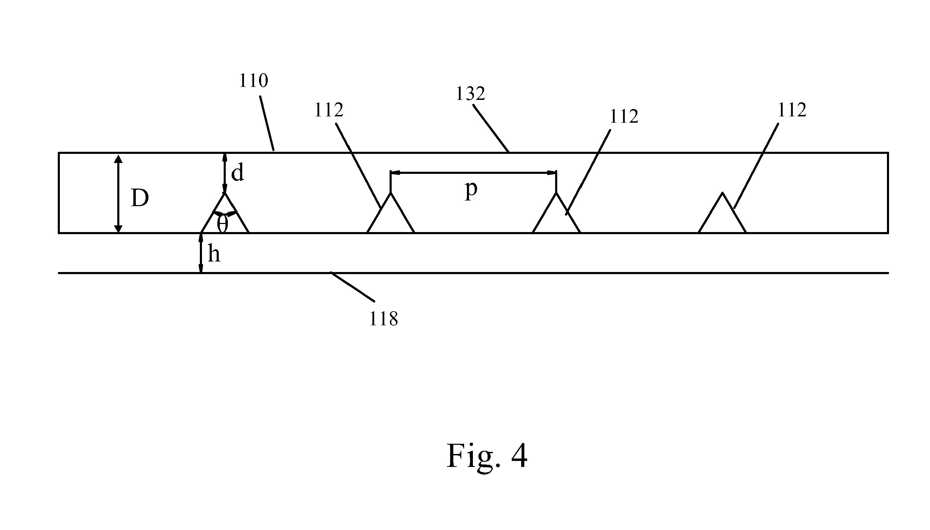

Please refer to Fig. 4, which is a side view of the backlight module 100. The four vertical grooves 112 are shown in Fig. 4. Similarly, d, θ, and h can be determined by designers to control the distribution of emergent light of the light guide plate 110 and to make the light of each domain be more evenly distributed. For the horizontal groove 111 and the second vertical grooves 112, the distance between the vertex of the triangle and the light emitting surface 132 of the light guide plate 111 is d. The distance d is one eighth to seven eighths of the thickness D of the light guide plate 111. The angle θ of the vertex of the triangle is between 30 degrees and 150 degrees. For instance, when the thickness D of the light guide plate 111 is 4 centimeters, the distance d is 3.0262 centimeters and the angle θ is 62 degrees.

It is notified that, the distance between the two vertical grooves 112 is p, which applies to one preferred embodiment of the present invention only. Actually, the distance p between two vertical grooves 112 can be equally-distanced or can vary based on a certain pattern. For instance, the distance p is set to be

$$\frac{W}{n+1} \le p \le \frac{W}{2}$$, in which W represents the length of the light guide plate 111 and n represents the total number of backlight sources 120 at the same side of the light guide plate 110.

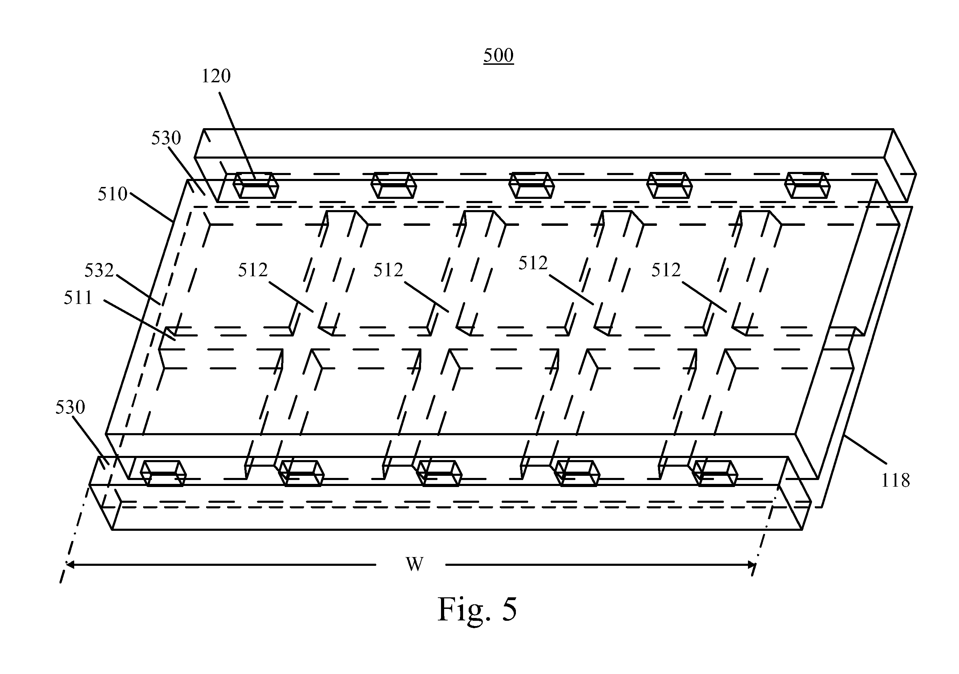

Please refer to Fig. 5, which is a schematic diagram of the backlight module 500 according to a second embodiment of the present invention. The backlight module 500 is quite similar to the backlight module 100 of the first embodiment. The backlight sources 120 are equally disposed on the light incident surfaces 530 at both sides of the light guide plate 510 in a horizontal direction. The two light incident surfaces 530 are in parallel to each other. The light guide plate 510 comprises a horizontal groove 511 and four vertical grooves 512 on the bottom surface relative to the light incident surfaces 530. The only difference is that the cross section of the horizontal groove 511 and of the vertical grooves 512 is trapezoidal, instead of triangular in the first embodiment. Apart from the shape of the cross section of the horizontal groove 511, a description of other components has been explained carefully. Those skilled in this art are supposed to understand how these components function and operate, and further details will be provided.

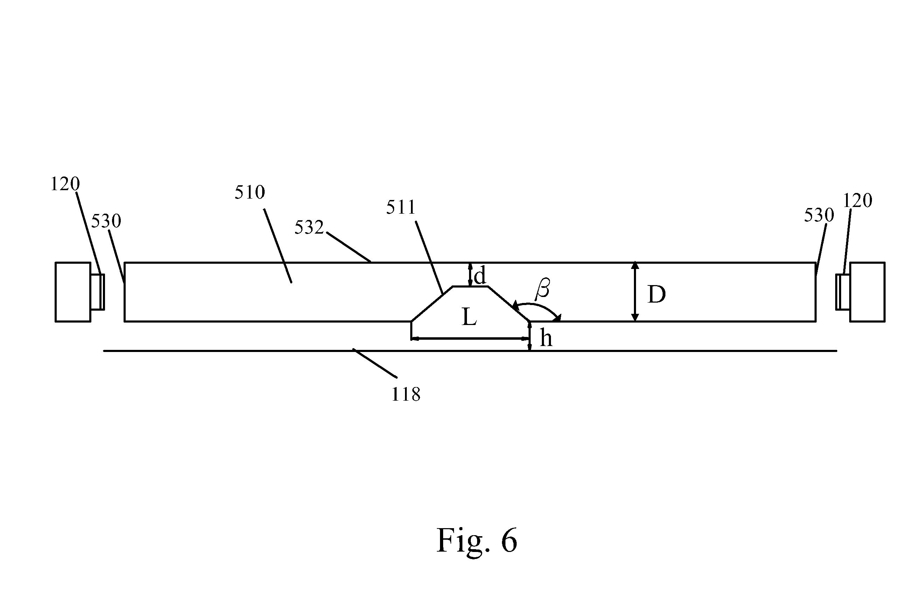

Please refer to Fig. 6, which is a side view of the backlight module 500 shown in Fig. 5. The trapezoid is a cross section of the horizontal groove 511. The parameter d indicates a distance between the upper base of the trapezoid and the light emitting surface 532 of the light guide plate 510; β indicates an included angle between the hypotenuse of the trapezoid and the bottom surface of the light guide plate 510; L indicates the length of the lower base of the trapezoid; h indicates the distance between the bottom surface of the light guide plate 510 and the reflective layer 118. Similar to the above-mentioned triangle, d, β, L, and h of the trapezoid can be determined by designers. As long as materials of light guide plates, microstructures, and light sources are settled, a proper design of d, β, L, and h can change the distribution of emergent light of the light guide plate and make the light of each domain be more evenly distributed.

In addition, the design concept of the horizontal groove 511 can apply to the vertical grooves 512. In other words, d, β, L, and h of the vertical grooves 512 can be properly planed by designers. In this way, the distribution of emergent light of the light guide plate 510 can be changed to provide each domain with more evenly distributed light. For the horizontal groove 511 and the vertical grooves 512, the distance between the upper base of the trapezoid and the light emitting surface 532 of the light guide plate 510 is d. The distance d is one eighth to seven eighths of the thickness of the light guide plate 510. The angle β between the hypotenuse of the trapezoid and the bottom surface of the light guide plate 510 is between 90 degrees and 150 degrees. Similarly, the distance p between two vertical grooves 512 can be equally-distanced or can vary based on a certain pattern. For instance, the distance p is postulated to be

$$\frac{W}{n+1} \le p \le \frac{W}{2} ,$$ in which W represents the length of the light guide plate 511 and n represents the total number of backlight sources 120 at the same side of the light guide plate 510.

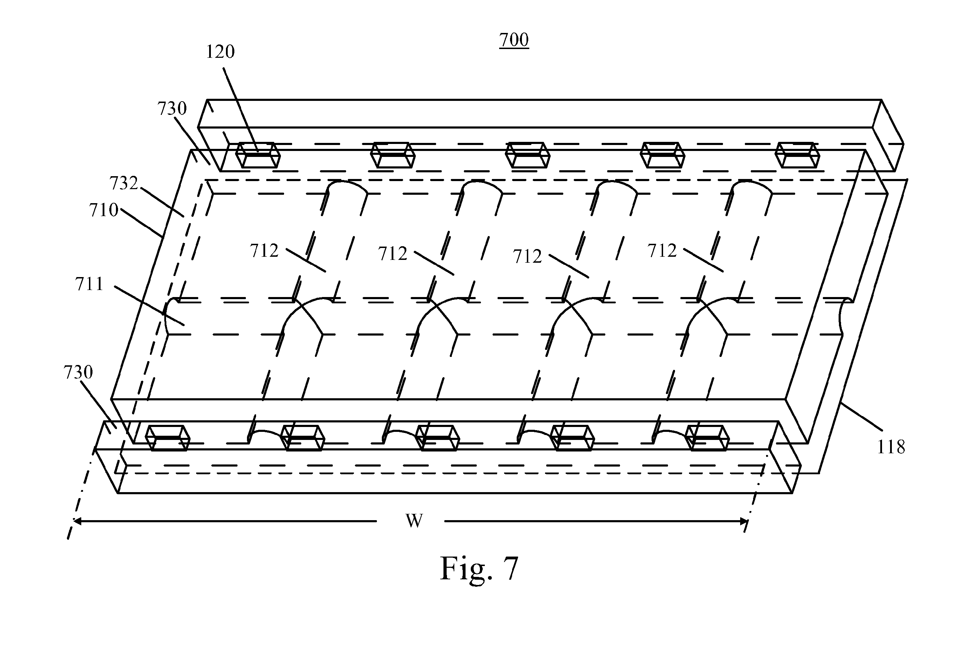

Please refer to Fig. 7, which is a schematic diagram of the backlight module 700 according to a third embodiment of the present invention. The backlight module 700 is similar to the backlight module 100 of the first embodiment. Backlight sources 120 are respectively disposed on both sides of the light incident surfaces 730 of the light guide plate 710 in a horizontal direction. The two light incident surfaces 730 are in parallel to each other. The light guide plate 710 comprises a horizontal groove 711 and four vertical grooves 712 on the bottom surface relative to the light incident surfaces 730. The only different is that the cross section of the horizontal groove 711 and of the vertical grooves 712 is curved convex in shape, instead of triangular in the first embodiment. A description of other components has been explained carefully. Those skilled in this art are supposed to understand how these components function and operate, and further details will be provided.

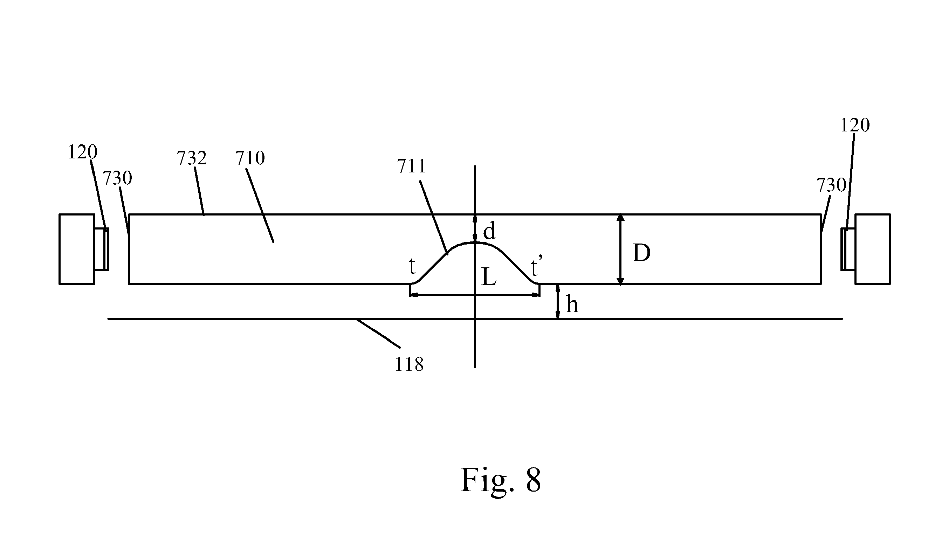

Please refer to Fig. 8, which is a side view of the backlight module 700 in Fig. 7. The convex curve is the cross section of the horizontal groove 711. The distance between the vertex of the convex curve and the light emitting surface 732 of the light guide plate 710 is d. The convex curve is tangent to the bottom surface of the light guide plate 710 at two points, t and t'. The distance of the two points of tangency is L. The shape of the convex curve shown in Fig. 8 is not constrained; instead it can be designed arbitrarily to optimize the angle of reflection of light.

Similarly, d, L, and h of the trapezoid can be determined by designers. As long as materials of light guide plates, microstructures, and light sources are settled, a proper design of d, L, and h can change the distribution of emergent light of the light guide plate 710 and make the light of each domain be more evenly distributed.

In addition, the design concept of the horizontal groove 711 can apply to the vertical grooves 712. In other words, d, L, and h of the vertical grooves 712 can be properly planed by designers. In this way, the distribution of emergent light of the light guide plate 710 can be changed to provide each domain with more evenly distributed light. For the horizontal groove 711 and the vertical grooves 712, the distance between a peak of the curved convex and the light emitting surface 732 of the light guide plate 710 is labeled as d. The distance d is one eighth to seven eighths of the thickness of the light guide plate 710. Similarly, the distance p between two vertical grooves 712 can be equally-distanced or can vary based on a certain pattern. For instance, the distance p is postulated to be $\frac{W}{n+1} \le p \le \frac{W}{2}$ , in which W represents the length of the light guide plate 711 and n represents the total number of backlight sources 120 at the same side of the light guide plate 710.

It is notified that the horizontal groove and the vertical grooves in each of the embodiments have the same cross section, but actually such a design is merely an embodiment of the present invention, instead of being used to limit the present invention. Practically, each of the grooves (including the horizontal groove and the vertical grooves) can have a particular cross section. Such a corresponding modification falls within the spirit and scope of the present invention. For example, the cross section of the horizontal groove can be triangular in shape, and the cross section of some of the vertical grooves can be trapezoidal and of the others can be convex curved. In brief, the shape of grooves can be determined one by one by designers. Such a corresponding modification falls within the spirit and scope of the present invention as well.

Although the present invention has been explained by the embodiments shown in the drawings described above, it should be understood to the ordinary skilled person in the art that the invention is not limited to the embodiments, but rather various changes or modifications thereof are possible without departing from the spirit of the invention. Accordingly, the scope of the invention shall be determined only by the appended claims and their equivalents.

**Claims**

1. A light guide plate (110, 510, 710) comprising a bottom surface, a light emitting surface (132, 532, 732) opposite to the bottom surface, two light incident surfaces (130, 530, 730), and a plurality of grooves disposed on the bottom surface; the two light incident surfaces (130, 530, 730) being in parallel to each other and being connected to the bottom surface and to the light emitting surface (132, 532, 732), **characterized in that** the groove comprises:

> a first groove (111, 511, 711), extended in a direction parallel to the light incident surfaces (130, 530, 730); the cross section of the first groove (111, 511, 711) being trapezoidal, convex curved, or triangular in shape; and
> a plurality of second grooves (112, 512, 712), extended in a direction perpendicular to the light incident surfaces (130, 530, 730); the cross section of the plurality of second grooves (112, 512, 712) being trapezoidal, convex curved, or triangular in shape.

**2.** The light guide plate (110, 510, 710) of claim 1, **characterized in that** the plurality of second grooves (112, 512, 712) are arranged at equal space intervals in a direction parallel to the light incident surfaces (130, 530, 730).

**3.** A backlight module (100, 500, 700) comprising a plurality of backlight sources (120) and a light guide plate (110, 510, 710), the plurality of backlight sources (120) being arranged at both sides of the light guide plate (110, 510, 710) in a first direction for emitting light, **characterized in that** the light guide plate (110, 510, 710) comprises:

> a first groove (111, 511, 711), corresponding to the first direction; the cross section of the first groove (111, 511, 711) being trapezoidal, convex curved, or triangular in shape; and
> a plurality of second grooves (112, 512, 712), corresponding to a second direction perpendicular to the first direction, the cross section of the second grooves (112, 512, 712) being trapezoidal, convex curved, or triangular in shape;
> wherein the cross section of the first groove (111, 511, 711) differs from that of the plurality of second grooves (112, 512, 712), the first groove (111, 511, 711) and the plurality of second grooves (112, 512, 712) divide the light guide plate into a plurality of domains; the brightness of each of the plurality of domains is controlled by at least one backlight source from the plurality of backlight sources (120).

**4.** The backlight module (100, 500, 700) of claim 3, **characterized in that** the plurality of second grooves (112, 512, 712) are arranged at equal distances.

**5.** A backlight module (100) comprising a plurality of backlight sources (120), a reflective layer (118) and a light guide plate (110), the plurality of backlight sources (120) being arranged at both sides of the light guide plate (110) in a first direction for emitting light, **characterized in that** the light guide plate (110) comprises:

> a first groove (111), corresponding to the first direction; the cross section of the first groove (111) being triangular in shape; and
> a plurality of second grooves (112), corresponding to a second direction perpendicular to the first direction, the cross section of the second grooves (112) being triangular in shape;
> wherein the first groove (111) and the plurality of second grooves (112) divide the light guide plate (110) into a plurality of domains, the brightness of each of the plurality of domains is controlled by at least one backlight source (120) from the plurality of backlight sources (120).

**6.** The backlight module (100) of claim 5, **characterized in that** a distance between a vertex of the triangular-shaped first groove (111) or the triangular-shaped second grooves (112) and a light emitting surface of the light guide plate (110) is one eighth to seven eighths of a thickness of the light guide plate (110), and an angle of the vertex of the triangle is between 30 degrees and 150 degrees.

**7.** A backlight module (500) comprising a plurality of backlight sources (120) and a light guide plate, the plurality of backlight sources (120) being arranged at both sides of the light guide plate (510) in a first direction for emitting light, **characterized in that** the light guide plate (510) comprises:

> a first groove (511), corresponding to the first direction; the cross section of the first groove (511) being trapezoidal in shape; and
> a plurality of second grooves (512), corresponding to a second direction perpendicular to the first direction, the cross section of the second grooves (512) being trapezoidal in shape;
> wherein the cross section of the first groove (511) differs from that of the plurality of second grooves (512), the first groove (511) and the plurality of second grooves (512) divide the light guide plate (510) into a plurality of domains; the brightness of each of the plurality of domains is controlled by at least one backlight source (120) from the plurality of backlight sources (120).

**8.** The backlight module (500) of claim 7, **characterized in that** a distance between a upper base of the trapezoid-shaped first groove (511) or the trapezoid-shaped second grooves (512) and a light emitting surface of the light guide plate (510) is one eighth to seven eighths of a thickness of the light guide plate (510), and an angle between a hypotenuse of the trapezoid and a bottom surface of the light guide plate (510) is between 90 degrees and 150 degrees.

9. A backlight module (700) comprising a plurality of backlight sources (120) and a light guide plate (710), the plurality of backlight sources (120) being arranged at both sides of the light guide plate (710) in a first direction for emitting light, **characterized in that** the light guide plate (710) comprises:

a first groove (711), corresponding to the first direction, the cross section of the first groove (711) being convex curved in shape; and a plurality of second grooves (712), corresponding to a second direction perpendicular to the first direction, the cross section of the second grooves (712) being convex curved in shape; wherein the cross section of the first groove (711) differs from that of the plurality of second grooves, the first groove (711) and the plurality of second grooves (712) divide the light guide plate (710) into a plurality of domains; the brightness of each of the plurality of domains is controlled by at least one backlight source (120) from the plurality of backlight sources (120).

10. The backlight module (700) of claim 9, **characterized in that** a distance between a peak of the convex-curved-shaped first groove (711) or the convex-curved-shaped second grooves (712) and a light emitting surface of the light guide plate (710) is one eighth to seven eighths of a thickness of the light guide plate (710).

Fig. 1

EP 2 600 188 A1

116

Driving circuit

| | $C_1$ | $D_1$ | |
|---|---|---|---|
| $c_1$ | | | $d_1$ |
| | ⋮ | ⋮ | |
| $c_{i-1}$ | $C_{i-1}$ | $D_{i-1}$ | $d_{i-1}$ |
| $c_i$ | $C_i$ | $D_i$ | $d_i$ |
| $c_{i+1}$ | $C_{i+1}$ | $D_{i+1}$ | $d_{i+1}$ |
| | ⋮ | ⋮ | |
| $c_n$ | $C_n$ | $D_n$ | $d_n$ |

110

Fig. 2

Fig. 3

Fig. 4

Fig. 5

EP 2 600 188 A1

EP 2 600 188 A1

Fig. 6

Fig. 7

EP 2 600 188 A1

Fig. 8

# INTERNATIONAL SEARCH REPORT

| International application No. |
|---|
| PCT/CN2010/078758 |

## A.    CLASSIFICATION OF SUBJECT MATTER

**See extra sheet**

According to International Patent Classification (IPC) or to both national classification and IPC

## B.    FIELDS SEARCHED

Minimum documentation searched (classification system followed by classification symbols)

IPC: G02F, F21V, G02B, G09G

Documentation searched other than minimum documentation to the extent that such documents are included in the fields searched

Electronic data base consulted during the international search (name of data base and, where practicable, search terms used)

CNABS, VEN: light w guid???    guide w light    lightguide    dimming    groove?    slot?    trough?    notch??

## C.    DOCUMENTS CONSIDERED TO BE RELEVANT

| Category* | Citation of document, with indication, where appropriate, of the relevant passages | Relevant to claim No. |
|---|---|---|
| A | US2009/0316433A1 (Sung-Kyu Shim et al.) 24 Dec.2009 (24.12.2009) Fig.1, and paragraphs [0031]-[0042] | 1-10 |
| A | WO2008/095395A1 (HONG KONG APPLIED SCI & TECHNOLOGY RES et al.) 14 Aug.2008 (14.08.2008) the whole document | 1-10 |
| A | TW200841085A (HANNSTAR DISPLAY CORP) 16 Oct.2008 (16.10.2008) the whole document | 1-10 |
| A | WO2008/133421A1(HYU W P et al.) 06 Nov.2008 (06.11.2008) the whole document | 1-10 |
| A | JP2006-202703A (DAINIPPON PRINTING CO LTD) 03 Aug.2006 (03.08.2006) the whole document | 1-10 |

☐ Further documents are listed in the continuation of Box C.          ☒ See patent family annex.

| *      Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 18 Apr. 2011 (18.04.2011) | **19 May 2011 (19.05.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>SHANG，Aixue<br><br>Telephone No. (86-10)62085591 |
|---|---|

Form PCT/ISA /210 (second sheet) (July 2009)

<table>
<tr><td colspan="2" rowspan="2"><strong>INTERNATIONAL SEARCH REPORT</strong><br>Information on patent family members</td><td colspan="2">International application No.<br><br>PCT/CN2010/078758</td></tr>
<tr></tr>
<tr><td>Patent Documents referred<br>in the Report</td><td>Publication Date</td><td>Patent Family</td><td>Publication Date</td></tr>
<tr><td>US2009/0316433A1</td><td>24.12.2009</td><td>KR20090131956A</td><td>30.12.2009</td></tr>
<tr><td>WO2008/095395A1</td><td>14.08.2008</td><td>US2008186734A1</td><td>07.08.2008</td></tr>
<tr><td>TW200841085A</td><td>16.10.2008</td><td>US2008252818A1</td><td>16.10.2008</td></tr>
<tr><td>WO2008/133421A1</td><td>06.11.2008</td><td>KR20080095738A</td><td>29.10.2008</td></tr>
<tr><td></td><td></td><td>KR20080113320A</td><td>30.12.2008</td></tr>
<tr><td></td><td></td><td>KR100882801B1</td><td>09.02.2009</td></tr>
<tr><td></td><td></td><td>KR100937773B1</td><td>26.01.2010</td></tr>
<tr><td></td><td></td><td>EP2150748A1</td><td>10.02.2010</td></tr>
<tr><td></td><td></td><td>CN101675294A</td><td>17.03.2010</td></tr>
<tr><td></td><td></td><td>US2010085774A1</td><td>08.04.2010</td></tr>
<tr><td></td><td></td><td>JP2010525541T</td><td>22.07.2010</td></tr>
<tr><td>JP2006-202703A</td><td>03.08.2006</td><td>None</td><td></td></tr>
</table>

Form PCT/ISA /210 (patent family annex) (July 2009)

# INTERNATIONAL SEARCH REPORT

International application No.

PCT/CN2010/078758

A. CLASSIFICATION OF SUBJECT MATTER

According to International Patent Classifications (IPC) or to both national classification and IPC

G02F1/13357 (2006.01) i
F21V8/00 (2006.01) i
G02B6/00 (2006.01) i

Form PCT/ISA /210 (extra sheet) (July 2009)